# EUROPEAN PATENT APPLICATION

(11) **EP 4 008 455 A1**
(43) Date of publication of application: **08.06.2022**
(21) Application number: 20211402.1
(22) Date of filing: 03.12.2020
(51) Int. Cl.: B22F 10/28, B22F 10/362, B22F 12/00, B22F 12/41, B23K 15/00, B33Y 10/00, B33Y 30/00

(54) **FUSING ONE OR MORE CROSS SECTIONS BY ELECTRON BEAM POWDER BED FUSION**

(71) Applicant: Siemens Aktiengesellschaft, 80333 München (DE)
(72) Inventor: Drendel, Jan, 13355 Berlin (DE); Heinrichsdorff, Frank, 14513 Teltow (DE); Logvinov, Ruslan, 95447 Bayreuth (DE)

(57) **Abstract**

In summary the invention concerns a method for fusing one or more cross sections (C1, C2) in a powder bed (PB), a method for building an object (1, 2) and an electron beam powder bed fusion system (100). To provide an improved smoke-free process for electron beam powder bed fusion, enabling more complex geometries and reducing the need for postproduction/postprocessing of the built object following steps are proposed:
- pre-sintering (S2) the cross sections (C1, C2) in the powder layer (Ln) by scanning the cross sections (C1, C2) with a first line energy,
- fusing (S3) the cross sections (C1, C2) by scanning the cross sections (C1, C2) with a second line energy,
wherein the second line energy exceeds the first line energy, preferably by at least a factor of 2 or at least a factor of 5.

## Description

The invention concerns a method for fusing one or more cross sections, a method for building an object and an electron beam powder bed fusion system.

In conventional electron beam powder bed fusion (EB-PBF) an object is built layer by layer by applying a thin powder layer on top of the previous one and selectively melting the cross-section of the object by exposing it to a focused electron beam.

In contrast to a laser beam as source of the power necessary to melt the powder, an electron beam brings electrical charge (electrons) into the powder particles. Due to the poor electrical conductivity of powder beds, the charge in the particles can grow so large that the electrostatic forces lead to an almost explosive repulsion, commonly known as "smoke". This destroys the powder layer and can lead to process interruption, termination, or poor object quality.

To avoid the smoke phenomenon, after powder application and before melting, the temperature of the powder layer is increased by heating it while increasing the beam power until the electrical conductivity of the powder has increased enough, to safely use a focused beam to melt it.

This enables a smoke-free process but results in the remaining powder being sintered together and thus sticking to the object that was built. Therefore, in post-processing an additional step is required that removes the sintered powder, e.g. by powder-blasting the object with the same powder as being used in the build process.

However, objects being built by EB-PBF are geometrically limited, compared to objects being built by laser powder bed fusion (L-PBF). The sintered powder cannot be removed from cavities with small entry holes or undercuts, due to lack of accessibility in post-processing. For example, this prevents the manufacturing of e.g. turbine blades with complex internal cooling channels using EB-PBF.

The problem to be solved by the invention is to provide an improved smoke-free process for electron beam powder bed fusion, enabling more complex geometries and reducing the need for postproduction/postprocessing of the built object.

This problem is solved by the method of claim 1. The method is used for fusing one or more cross sections in a powder layer for building one or more objects layer by layer. The process applied is electron beam powder bed fusion. The method according to the invention comprises the following steps:
- pre-sintering only the cross sections in the powder layer by scanning the cross sections with a first line energy,
- fusing the cross sections by scanning the cross sections with a second line energy.

The second line energy exceeds the first line energy, preferably by at least a factor of 2 or at least a factor of 5. This allows for an exact pre-sintering step, which reduces the risk of smoke-events significantly, while the quality of the object built directly by electron beam powder bed fusion is improved.

The line energy (also: line energy density) is a function of the power of the electron beam (corresponding to a beam current and a beam voltage) and a beam velocity. The beam velocity describes the speed the beam moves in the plane of the powder bed/the current layer. The line energy is proportional to beam power over the velocity (P/v) and usually has the unit Joule per meter (J/m).

Scanning refers to scanning the powder bed with the electron beam of the electron beam powder bed fusion apparatus.

The cross section is usually created from a 3D model of the object to be built with a "slicer". The cross sections built on top of each other form the one or more objects. In a single powder bed multiple objects can be built from multiple cross sections. Also, single objects can have multiple cross sections in a particular layer, e.g. when sections of the object comprise split structures.

The advantage of the invention is, that the pre-sintering step only sinters the cross section and does not sinter the surrounding powder bed unwanted to the object. This enables an almost postprocessing free build.

In a further embodiment of the invention, the step of pre-sintering comprises a first beam velocity and the step of fusing comprises a second beam velocity. The first beam velocity exceeds the second beam velocity by a factor of at least 2, especially a factor of 5. In other words, the pre-sintering step is carried out with a high scanning speed of the electron beam. The scanning speed refers to the speed the electron beam moves over the powder bed, i. e. the current powder layer respectively. It has been found that a pre-sintering step with high beam speeds allows for a very efficient and high accuracy step which provides sufficient sintering of the cross section to reduce smoke while keeping the shape of the cross section. This reduces the post processing steps of the object (like sand blasting) significantly while further reducing the risk of a smoke event.

In a further embodiment of the invention, the step of pre-sintering comprises scanning exactly the one or more cross sections. In other words, the electron beam scans the same area as in the step of fusing, namely the one or more cross sections.

In a further embodiment of the invention, the method comprises a step of pre-heating the powder layer by scanning the powder layer with a constant line energy over the powder layer. The step of preheating leads to a higher overall powder bed temperature, which is close to fusing temperatures and significantly improves electrical conductivity of the powder bed. The step of pre-heating also achieves a very light sintering of the powder bed, just enough to prevent smoke when the electron beam moves from one cross section to the next but not enough sintering to create the need for post processing or to prevent smoke when the electron beam scans with a higher line energy. The step of pre-heating also achieves a uniform energy input over the powder layer. The cross sections are heated together with the rest of the powder bed, thus achieving a uniform heating over the powder bed.

In a further embodiment of the invention, the steps of pre-sintering and fusing are carried out with an equal beam diameter. In other words, the beam diameter is set the same in the step of pre-sintering and fusing. The beam thus is used with the same focus settings for both steps. This allows the step of pre-sintering being carried out with the same accuracy as the step of fusing. This further reduces the need for post processing. The beam for fusing has a typical diameter of between 0,1mm and 0,5 mm and therefore also can be used for the step of pre-sintering before the step of fusing. It is noted that the step of pre sintering can also be carried out with a smaller beam diameter than the step of fusing.

In a further embodiment of the invention, the first beam velocity is greater than 50 m/s, preferably greater than 100 m/s. It has been found that those very high speeds allow for excellent pre sintering results.

In a further embodiment of the invention, the method comprises a step of post-heating at least parts of the one or more cross sections after fusing by scanning at least parts of the cross sections with a non-uniform line energy to achieve a uniform temperature distribution over the cross sections. The post heating can be conducted by scanning at least parts of the cross sections applying post-heating parameters for a non-uniform heat input to achieve a uniform temperature distribution over the cross sections. The post heating has the goal to achieve a uniform temperature distribution within the currently scanned cross section. Since temperatures can reach over 1000°C within the powder bed, a uniform temperature can be assumed when the temperature differs no more than +/- 50 K within the cross section. If lower temperature melting materials like copper are used, a uniform temperature can be assumed if the temperature differs no more than +/- 20 K within the cross section. The beam parameters used can be similar to the parameters used in fusing, with a smaller line energy to avoid re-melting of the post-heating areas. The colder an area within a cross section is, the more energy is needed to apply the post-heating. It is noted that the step of post-heating is especially efficient, when combined with a step of pre-heating, improving the overall temperature control of the process.

In a further embodiment of the invention, the method comprises a step of post-heating each one of the cross sections by scanning each of the cross sections with a uniform line energy, to achieve a uniform temperature distribution in the respective cross section. Preferably the uniform temperature distribution not only is achieved within each of the cross sections, but all the cross sections comprise a uniform temperature distribution when compared to each other. This form of post-heating is preferred for multiple, e.g. 10, smaller cross sections in the powder bed (the current layer) that are not connected to each other. It can be assumed that those smaller parts do not have a strong temperature gradient within themselves, which allows for a uniform energy input per cross section.

In a further embodiment of the invention, the method comprises a step of post-heating by dividing each cross section into subsections and applying a definable line energy to each subsection to achieve a uniform temperature distribution in the respective cross section. For example, cross sections with differences in already solidified / fused mass optionally including previous layers and therefore differences in heat capacity can be divided into areas with higher heat capacity and areas with lower heat capacity. E.g. the flange region of an impeller wheel is mostly solid with a higher heat capacity vs. the outer fine structured blades with less heat capacity. The areas with finer structuring likely need post heating in comparison with the areas with a higher heat capacity.

In a further embodiment of the invention, the method comprises a step of heating by determining an edge region within each cross section and applying a uniform line energy to each edge region. The uniform line energy can vary from cross section to cross section. Applying a uniform line energy to each edge region is especially advantageous when the temperature in the edge regions / the contour of the cross section is too low.

It is noted that all the above post-heating steps can be combined in one post-heating step for one layer - if necessary. E.g. if a big part with sections is built together with smaller parts - or if the big part has delicate and unconnected cross sections in the current layer.

In a further embodiment of the invention, the step of pre-sintering comprises scanning the cross sections with an accuracy identical to an accuracy of the step of fusing. The accuracy is influenced by the beam diameter - which is preferably identical to step of fusing - and the velocity of the beam. Slight deviations of accuracy can still be assumed as identical when the beam speed of pre-sintering is up to 20 times the speed of the fusing step.

It is possible to carry out the step of pre-sintering with an accuracy that where a deviation from the cross section can be realized that is not greater than an average powder diameter. In other words, the resolution of the pre sintering step should allow a value of the magnitude an average powder particle diameter.

In a further embodiment of the invention, the step of pre-sintering comprises scanning the cross-sections with an accuracy of +/- 100 µm. These accuracies can be achieved with usual EBM systems.

The problem is further solved by a method for building one or more objects layer by layer by electron beam powder bed fusion. The method comprises fusing one or more cross sections in one or more powder layers according to any of the above embodiments of the invention. The embodiments can be used for single very critical layers or the whole build of the object in each layer.

The following figures show embodiments or parts of embodiments of the current invention and further explain details.
- FIG 1: shows a simple object to be built layer by layer,
- FIG 2: shows a current powder layer with cross sections,
- FIG 3: shows an EB PBF system,
- FIG 4: shows a powder bed with a larger object to be built and
- FIG 5: shows an edge region of the larger object.

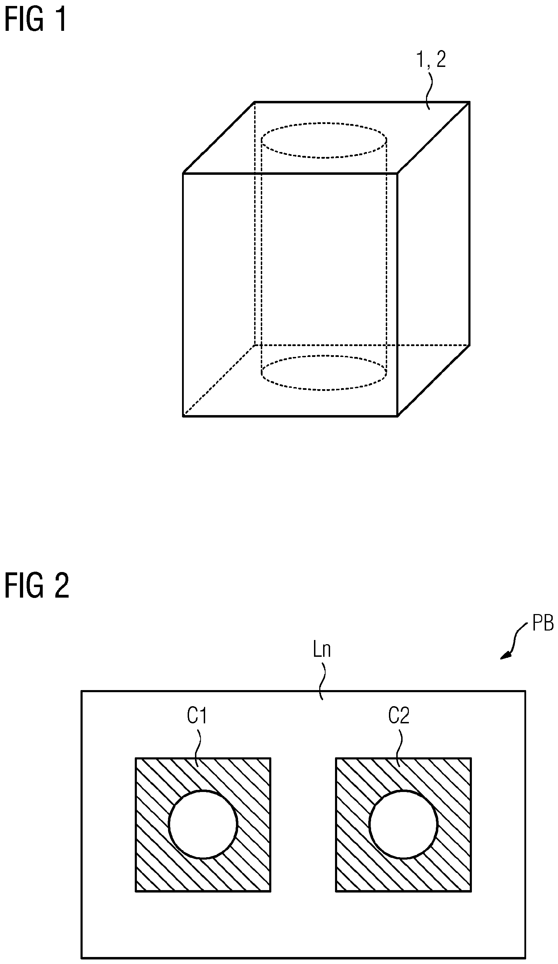

FIG 1 shows a simple object 1, 2 to be built layer by layer. The object 1,2 is a cuboid with a circular or elliptical trough hole in its middle. The object is to be built layer by layer with electron beam powder bed fusion from a metal powder which is provided layer by layer in a powder bed.

FIG 2 shows a current powder layer Ln with cross sections C1, C2 to be fused in a powder bed PB. Since the powder bed PB is wide enough, a first object 1 and a second identical object 2 can be built in one batch. The following steps can be carried out in this order.

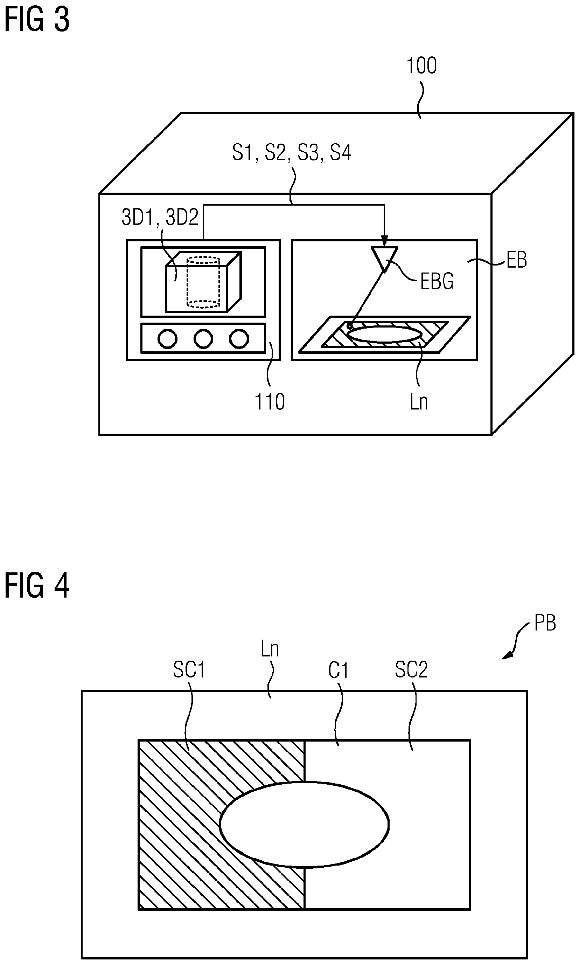

FIG 3 shows an electron beam powder bed fusion system 100 which comprises a control unit 110 that controls a fusion process by controlling an electron beam gun creating an electron beam EB for fusing cross sections C1, C2 of a powder layer Ln according to the invention and is configured to carry out the steps S1 through S4.

In the current layer Ln a first step of pre-heating S1 would comprise scanning and thus heating the whole layer Ln with a constant line energy over the whole powder layer Ln. This enables a mostly uniform temperature distribution over the whole powder bed. The temperature to be achieved by the pre-heating S1 is below melting temperature but high enough to achieve a sufficiently high electrical conductivity in the powder bed, dependent on the used material. The electrical contact resistance from one powder particle to another powder particle significantly decreases when a pre-heating temperature is reached, the pre-heating temperature is depending on the used material.

In a second step of pre-sintering S2 the cross sections C1, C2 are scanned with a lower line energy and preferably a much higher beam velocity than in the third step S3 of fusing. The area which is scanned in the pre-sintering step S2 and the fusing step S3 is ideally identical (allowing small tolerances).

In a fourth optional post-heating step S4 the large surfaces of the cross sections C1, C2 are heated with a uniform energy input. This allows for an easier pre-heating step in the next layer.

The control unit 110 can be configured to slice the 3D models 3D1, 3D2 into layers according to the systems capabilities.

The control unit 110 further can be configured to set for each layer Ln:
- a beam velocity,
- a beam focus (focus diameter) and
- a beam current and/or beam power,
each according to the current layer and, the cross sections in the current layer Ln and the current step S1,...,S4 to be scanned.

FIG 4 shows a powder bed PB with a cross section C1 of larger object to be built. In this case the cross section C1 is a rectangle with an elliptical cut out in its middle. Furthermore, two subsections SC1, SC2 have been determined, wherein the first subsection SC1 is post-heated S4 with a uniform line energy, to achieve a uniform temperature distribution within the cross section C1 as an example for subsection-post-heating. The second subsection SC2 can be post-heated with different line energy than the first subsection SC1.

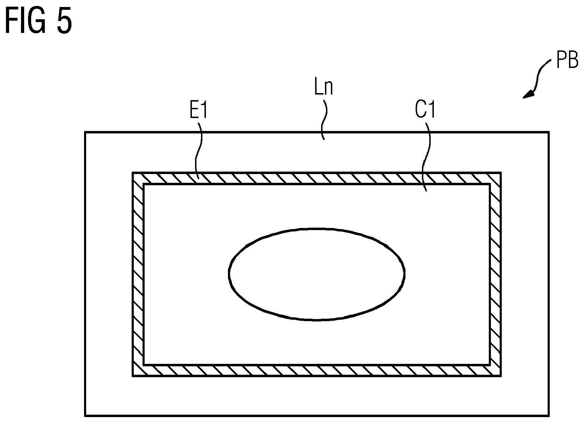

FIG 5 shows a powder bed PB with a cross section C1 of larger object to be built. In this case the cross section C1 is a rectangle with an elliptical cut out in its middle as shown in FIG 4. Furthermore, an edge region E1 has been determined, wherein the edge region E1 is post-heated S4 with a uniform line energy, to achieve a uniform temperature distribution within the cross section C1.

In summary the invention concerns a method for fusing one or more cross sections (C1, C2) in a powder bed (PB), a method for building an object (1, 2) and an electron beam powder bed fusion system (100). To provide an improved smoke-free process for electron beam powder bed fusion, enabling more complex geometries and reducing the need for postproduc-tion/postprocessing of the built object following steps are proposed:
- pre-sintering (S2) the cross sections (C1, C2) in the powder layer (Ln) by scanning the cross sections (C1, C2) with a first line energy,
- fusing (S3) the cross sections (C1, C2) by scanning the cross sections (C1, C2) with a second line energy,
wherein the second line energy exceeds the first line energy, preferably by at least a factor of 2 or at least a factor of 5.

### Table of reference signs

- 1, 2: objects to be built
- 3D1, 3D2: 3D-model of the objects
- Ln: current powder layer
- C1, C2: cross sections of one or more objects in the current powder layer
- S1: step of pre-heating
- S2: step of pre-sintering
- S3: step of fusing
- S4: step of post-heating
- PB: powder bed
- EB: electron beam
- EBG: electron beam gun
- 100: electron beam powder bed fusion system
- 110: control unit

## Claims

1. Method for fusing one or more cross sections (C1, C2) in a powder layer (Ln) for building one or more objects (1, 2) layer by layer with electron beam powder bed fusion, comprising the steps:
- pre-sintering (S2) the cross sections (C1, C2) in the powder layer (Ln) by scanning the cross sections (C1, C2) with a first line energy,
- fusing (S3) the cross sections (C1, C2) by scanning the cross sections (C1, C2) with a second line energy,
wherein the second line energy exceeds the first line energy, preferably by at least a factor of 2 or at least a factor of 5.

2. Method according to claim 1, wherein the step of pre-sintering (S2) comprises a first beam velocity which exceeds a second beam velocity of the step of fusing (S3) by a factor of at least 2, especially a factor of 5.

3. Method according to claim 1 or 2, wherein the step of pre-sintering (S2) comprises scanning exactly the one or more cross sections (C1, C2).

4. Method according to any of the preceding claims, comprising a step of pre-heating (S1) the powder layer (Ln) by scanning the powder layer (Ln) with a constant line energy over the powder layer (Ln).

5. Method according to any of the preceding claims, wherein the steps of pre-sintering (S2) and fusing (S3) are carried out with an equal beam diameter.

6. Method according to any of the preceding claims, wherein a first beam velocity of the step pre-sintering (S2) is greater than 50 m/s, preferably greater than 100 m/s.

7. Method according to any of the preceding claims, comprising a step of post-heating (S4) at least parts of the one or more cross sections (C1, C2) after fusing (S3) by scanning at least parts of the cross sections (C1, C2) with a non-uniform line energy to achieve a uniform temperature distribution over the cross sections (C1, C2).

8. Method according to any of the preceding claims, comprising a step of post-heating (S4) each one of the cross sections (C1, C2) by scanning each of the cross sections (C1, C2) with a uniform line energy, to achieve a uniform temperature distribution in the respective cross section (C1, C2).

9. Method according to any of the preceding claims, comprising a step of post-heating (S4) by dividing each cross section (C1, C2) into subsections (SC11, SC12) and applying a definable line energy to each subsection to achieve a uniform temperature distribution in the respective cross section (C1, C2) .

10. Method according to any of the preceding claims, comprising a step of post-heating (S4) by determining an edge region (E1, E2) within each cross section (C1, C2) and applying a uniform line energy to each edge region (E1, E2).

11. Method according to any of the preceding claims, wherein the step of pre-sintering (S2) comprises scanning the cross sections (C1, C2) with an accuracy identical to an accuracy of the step of fusing (S3).

12. Method according to any of the preceding claims, wherein the step of pre-sintering (S2) comprises scanning the cross-sections (C1, C2) with an accuracy of +/- 100 µm.

13. Method for building one or more objects (1,2) layer by layer, comprising fusing one or more cross sections (C1, C2) in one or more powder layers (Ln) according to any of the preceding claims.

14. Electron beam powder bed fusion system (100) for fusing one or more cross sections (C1, C2) in a powder layer (Ln) for building one or more objects (1, 2) layer by layer configured to:
- pre-sintering (S2) the cross sections (C1, C2) in the powder layer (Ln) by scanning the cross sections (C1, C2) with a first line energy,
- fusing (S3) the cross sections (C1, C2) by scanning the cross sections (C1, C2) with a second line energy,
wherein the second line energy exceeds the first line energy, preferably by at least a factor of 2 or at least a factor of 5.
